# EUROPÄISCHE PATENTSCHRIFT

(11) **EP 0 964 936 B1**
(45) Veröffentlichungstag und Bekanntmachung des Hinweises auf die Patenterteilung: **04.10.2001**
(21) Anmeldenummer: 98909422.2
(22) Anmeldetag: 09.02.1998
(51) Int. Cl.: C22C 1/04, H01G 9/042, B22F 9/20

(54) **TANTAL-PULVER, VERFAHREN ZU SEINER HERSTELLUNG, SOWIE DARAUS ERHÄLTLICHE SINTERANODEN**
TANTALUM POWDER, METHOD FOR PRODUCING SAME POWDER AND SINTERED ANODES OBTAINED FROM IT
POUDRE DE TANTALE, SON PROCEDE DE PRODUCTION ET ANODES FRITTEES REALISEES A PARTIR DE CETTE POUDRE

(30) Priorität: 19.02.1997 DE 19706416
(43) Veröffentlichungstag der Anmeldung: 22.12.1999
(73) Patentinhaber: H.C. Starck GmbH & Co. KG, 38642 Goslar (DE)
(72) Erfinder: REICHERT, Karlheinz, D-38304 Wolfenbüttel (DE); WOLF, Rüdiger, D-38690 Vienenburg (DE); RAWOHL, Christine, D-31137 Hildesheim (DE)
(74) Vertreter: Drope, Rüdiger, Dr.
(86) Internationale Anmeldenummer: EP9800698
(87) Internationale Veröffentlichungsnummer: WO9837248

(56) Entgegenhaltungen:
- EP-A- 0 347 668
- EP-A- 0 744 234
- DE-A- 19 536 013
- DE-A- 19 536 014
- US-A- 4 968 481

## Beschreibung

Die vorliegende Erfindung betrifft ein Tantal-Pulver, aus dem Tantal-Pulver erhältliche gepreßte und gesinterte Anoden, sowie Verfahren zur Herstellung von Tantal-Pulvern.

Metallisches Tantal-Pulver wird üblicherweise hergestellt durch Reduktion von K₂TaF₇ mittels Natrium. Die physikalischen Eigenschaften von Tantal-Pulvern, wie z.B. die Korngröße oder spezifische Oberfläche, werden durch Zugabe von Inertsalzen, wie KCl, NaCl, KF, NaF kontrolliert. Mit steigendem Anteil an Inertsalzen verfeinert sich das resultierende Tantal-Pulver, d.h. es vergrößert sich somit die resultierende Metalloberfläche. Der Durchsatz an Tantal-Metall in der Reduktion nimmt jedoch entsprechend der zunehmenden Inertsalzkonzentration ab.

Nach dem Auswaschen der Salze wird das Tantal-Pulver getrocknet und zur weiteren Reinigung einer Hochtemperaturbehandlung im Vakuum oder in Inertgasatmosphäre unterzogen. Bei diesem Agglomerierschritt wird die spezifische Oberfläche signifikant reduziert und der Sauerstoff-Gehalt des Pulvers deutlich erhöht. Dieser wird durch Temperaturbehandlungen mittels reduzierend wirkender Metalle, insbesondere Magnesium, wieder abgebaut. Eine weitere Folge dieser Desoxidation(en) ist eine leichte Reduzierung der Oberfläche. Zur Optimierung der elektrischen Eigenschaften der aus diesen Tantal-Pulvern hergestellten Kondensatoren werden die Tantal-Pulver mit Phosphor- und/oder Bor-haltigen Dotierungsmitteln versetzt.

Die elektrischen Eigenschaften von Tantal-Pulvern, wie die spezifische Ladung oder der Reststrom, werden an einer gepreßten, gesinterten und anschließend anodisch oxidierten, d.h. formierten Anode getestet. Die spezifische Ladung, ausgedrückt in µFV/g, ist ein Maß für die Kapazität des Kondensators und verhält sich direkt proportional zur Metalloberfläche. Der Reststrom, ausgedrückt in nA/µFV, ist ein Indikator dafür, wie gut ein Kondensator seine Ladung hält.

Bei der üblicherweise technisch durchgeführten Natrium-Reduktion von K₂TaF₇ in der Salzschmelze werden Kondensatorpulver mit spezifischen Ladungen von 18.000 bis 70.000 µFV/g wirtschaftlich hergestellt. Zur Erzielung der für hochkpazitive Kondensatoren erforderlichen Tantalpulver mit kleiner Primärteilchengröße ist es erforderlich, die Natrium-Reduktion von K₂TaF₇ in größerer Verdünnung (Verdünnungssalz Kcl, KF, NaCl) durchzuführen, die zu kleineren Agglomeraten führt (Sekundärteilchengröße 1 bis 5 µm, bei Primärteilchengrößen von etwa 0,3 µm). Die geringe Abmessung der Agglomerate macht es erforderlich, die Tantalpulver thermisch zu agglomerieren (Vorsintern), wobei einerseits unerwünschte Verunreinigungen entfernt werden und andererseits aber die spezifische Oberfläche wieder reduziert wird. Die für die Kondensatorherstellung günstige Porenstruktur der Agglomerate aufgrund der durch Formierung reststromarme Kondensatoren erhalten werden, wird aber erst durch mehrfaches Vorsintern mit Zerkleinerung der Agglomerate durch Abziehen zwischen den Sintervorgängen erzielt. Die höchstkapazitiven Tantal-Kondensatorpulver werden in der DE 195 36 013 A1 beschrieben. In den daraus hergestellten gesinterten Anoden werden unter Verzicht auf den sonst üblichen thermischen Agglomerierschritt spezifische Ladungen bis 91.810 µFV/g erreicht. Diese Tantal-Pulver weisen störende Verunreinigungen, wie z.B. Fluorid, in Konzentrationen >100 ppm auf. Ein Teil des hohen Fluorid-Gehaltes wird beim Sintern der Anoden abgebaut. Die dabei freigesetzten Fluoride verursachen in den Sinteröfen thermische Korrosion. Das in der Tantalanode verbleibende Fluorid bedingt wahrscheinlich die deutlich erhöhten Restströme. So weist ein Tantal-Pulver, welches nach dem Beispiel 6 aus DE 195 36 013 A1 hergestellt wurde, einen F-Gehalt von 460 ppm und einen Mg-Gehalt von 200 ppm auf. Weiterhin weisen diese Pulver den Nachteil auf, daß ihre Schüttdichte zu gering und die Bruchfestigkeit der daraus gepreßten Anoden gegenüber den konventionellen verfügbaren Pulvern zu niedrig sind. Daher haben diese Pulver noch keine technische Bedeutung erlangt. Weiterhin haftet diesen Tantal-Pulvern der Nachteil an, daß sie noch Restgehalte an Alkali enthalten, die, auch wenn diese nur im ppm-Bereich liegen, die Restströme wesentlich verschlechtern.

Sehr feinteilige Pulver werden durch Gasphasenreduktion von TaCl₅ mit Wasserstoff gewonnen. Dabei werden nicht mehr fließfähige im wesentlichen diskrete Pulver erhalten. Aufgrund der technisch schwierigen Verarbeitbarkeit haben diese Pulver keinen Eingang in die Kondensatortechnologie gefunden.

Aufgabe der Erfindung ist ein Tantal-Pulver bereitzustellen, das die genannten Nachteile nicht aufweist. Eine weitere Aufgabe der vorliegenden Erfindung ist die Bereitstellung eines wirtschaftlichen Verfahrens zur Herstellung von höchstkapazitiven Tantal-Pulvern.

Es wurde nun gefunden, daß durch Zünden eines Gemisches von Tantalpentachlorid und Magnesiumhydrid bereits vorversinterte, sehr feinteilige Tantalpulver (Agglomerate) erhalten werden, die hervorragend zur Herstellung von hochkapazitiven Kondensatoren geeignet sind. Aufgrund der schnell ablaufenden Reaktion, die nach nur wenigen Minuten beendet ist, entstehen auch ohne Einsatz von Verdünnungssalzen sehr kleine Primärteilchen mit typischen Abmessungen von 50 bis 300 nm, wegen des hohen Anteils von Tantal in dem Reaktionsgemisch miteinander in Berührung treten und innerhalb der kurzen Reaktionszeit aufgrund ihrer hohen Sinteraktivität versintern. Es entsteht ein schaumartiger, teilweise versinterter offenporiger Kuchen, aus dem durch Brechung und Siebung hervorragend fließfähige Aglgomerate mit mittleren Sekundärteilchengrößen von 10 bis 50 µm oder mehr erhalten werden, die nach Waschung und Trocknung sehr große spezifische Oberflächen von 1,5 bis 10 m²/g nach BET aufweisen.

Gegenstand der vorliegenden Erfindung ist demgemäß ein Verfahren zur Herstellung von Tantalpulver durch Zünden eines Gemisches aus Tantalpentachlorid und Magnesiumhydrid unter in Erdgasatmosphäre und anschließender Waschung des Reaktionsproduktes mit Mineralsäuren.

Vorzugsweise erfolgt die Umsetzung eines homogenisierten Gemisches aus Tantalpentachlorid und Magnesiumhydrid in einem Tantal-Reduktionsgefäß. Dabei wird weiter bevorzugt in die obere Lage diese homogenisierten Gemisches ein dünner Tantaldraht als Zünder eingebettet, der besonders elegant durch einen Zuleitungsdraht vorübergehend von außen an eine Niederspannungsquelle angeschlossen und auf helle Rotglut gebracht wird. Diese zündfähige Anordnung wird in einer mit Argon gefluteten Schutzkammer untergebracht. Nach dem Abkühlen des aufgrund der stark exothermen Reaktion bis zur Weißglut erhitzten Reaktionsproduktes, das in Form eines teilweise versinterten porösen Kuchens vorliegt, wird dieses grob gebrochen, mit Mineralsäuren gewaschen und getrocknet. Vorzugsweise wird als Waschflüssigkeit eine Schwefelsäure/Wasserstoffperoxidlösung eingesetzt. Die Waschung wird solange fortgesetzt, bis das Waschwasser chloridfrei ist.

Das Mengenverhältnis der Ausgangsstoffe für die Reaktionsmischung ist nicht kritisch, da sowohl das Magnesium als auch der Wasserstoff nach Abspaltung aus dem Magnesiumhydrid für die Reduktion zur Verfügung stehen. Pro Mol Pentachlorid können demgemäß 1,25 bis 3 mol Magnesiumhydrid eingesetzt werden. Aufgrund der niedrigen Siedetemperatur von Tantalpentachlorid und der niedrigen Zersetzungstemperatur von Magnesiumhydrid werden allerdings bei niedrigem Molverhältnis der Einsatzstoffe Ausbeuteverluste beobachtet. Ein Molverhältnis Tantalchlorid zu Magnesiumhydrid von 2 bis 3 ist daher bevorzugt. Dabei werden Ausbeuten von 80 bis 90 % bezüglich des eingesetzten Tantal erzielt. Es wird erwartet, daß die Ausbeuten weiter erhöht werden können, wenn die Umsetzung unter Druck erfolgt, beispielsweise in einem Autoklaven.

Als Reduktionsmittel wird vorzugsweise ein Magnesiumhydrid der Formel MgHₓ, wobei x größer als 1,2, besonders bevorzugt größer als 1,6 ist, eingesetzt.

Durch die Erfindung werden erstmals Tantalpulver bereitgestellt, die aus versinterten Primärteilchen bestehen, wobei die Primärteilchen eine Teilchengröße von 30 bis 300 nm, vorzugsweise 30 bis 150 nm, insbesondere bevorzugt weniger als 100 nm aufweisen, und wobei die durch Versinterung der Primärteilchen erhaltenen Sekundärteilchen eine D-50-Größe von oberhalb 10 µm, vorzugsweise oberhalb 13 µm aufweisen.

Dabei wird der D-50-Wert nach einer Ultraschallbehandlung über 15 Minuten zur Desagglomerierung nach der Mastersizer-Methode gemäß ASTM B 822 bestimmt.

Aufgrund der Sekundärteilchenstruktur der erfindungsgemäßen Pulver weisen diese hervorragende Fließeigenschaften, die für die weitere Verarbeitung bedeutsam sind, auf. Typischerweise betragen die nach dem Hall Flow-Fließfähigkeitstest ASTM-B-213 bestimmten Fließfähigkeitswerte für die erfindungsgemäßen Pulver durch einen 0,1 inch-Trichter 100 bis 140 Sekunden, durch einen 0,2 inch-Trichter 15 bis 25 Sekunden.

Die erfindungsgemäßen Pulver sind ferner alkali- und fluoridfrei. Insbesondere liegen die Alkaligehalte unter 2 ppm und die Fluoridgehalte unterhalb einer tolerierbaren Grenze von 20 ppm, bevorzugt unterhalb 5 ppm. Insbesondere sind Fluor, Natrium und Kalium in den erfindungsgemäßen Pulvern im allgemeinen nicht nachweisbar. Die Sauerstoffgehalte liegen bei 4000 bis 20000 ppm.

Die spezifische Oberfläche nach BET liegt im Bereich von 1,5 bis 10 m²/g, vorzugsweise oberhalb 2 m²/g, insbesondere bevorzugt zwischen 3 und 6 m²/g.

Nach einer bevorzugten Ausführungsform der Erfindung werden der Reaktionsmischung bereits vor der Zündung keimwachstums- und sinterhemmende Substanzen zugemischt, sodaß die resultierenden Pulver mit diesen dotiert werden. Als Dotiermittel werden phosphor- und/oder stickstoffhaltige Substanzen bevorzugt.

Erfindungsgemäß bevorzugte Tantalpulver weisen daher Phosphorgehalte von 30 bis 2000 ppm, vorzugsweise 300 bis 2000 ppm Phosphor auf. Der Stickstoffgehalt der erfindungsgemäß bevorzugten Tantalpulver kann 100 bis 15 000 ppm, vorzugsweise mindestens 500 ppm Stickstoff betragen.

Bevorzugt wird als Phosphor-Dotiermittel elementarer Phosphor eingesetzt, vorzugsweise als pulverförmiger roter Phosphor. Das Dotiermittel kann in Mengen von bis zu 5000 ppm der zündfähigen Mischung zugesetzt werden.

Als Stickstoff-Dotiermittel sind Ammoniumsalze mit flüchtiger Anionkomponente, wie z.B. Ammoniumchlorid oder auch Stickstoff oder Ammoniak geeignet.

Bei gleichzeitiger Dotierung mit Stickstoff und Phosphor können vorteilhaft Ammoniumphosphate als Dotiermittel eingesetzt werden.

Obwohl die Erfindung unter Einsatz von Magnesiumhydrid als Reduktionsmittel entwickelt wurde, ist davon auszugehen, daß auch Kalziumhydrid als Reduktionsmittel eingesetzt werden kann. Kalziumhydrid unterscheidet sich von Magnesiumhydrid im wesentlichen dadurch, daß es sich nicht bereits bei niedriger Temperatur von 280 bis 300°C zersetzt, sondern eine Schmelztemperatur von oberhalb 1000°C aufweist. Jedoch ist davon auszugehen, daß die Umsetzung nach Zündung derart schnell abläuft, daß ein Zwischenzustand, der durch die Zersetzung des Magnesiumhydrids gekennzeichnet ist, keinen wesentlichen Einfluß auf die Reaktion hat. Insbesondere werden nur unwesentliche Einflüsse auf das Reaktionsprodukt erwartet. In allgemeinerer Formulierung ist demgemäß Gegenstand der Erfindung ein Verfahren zur Herstellung von Tantalpulver durch Zündung einer Mischung aus Tantalpentachlorid und Erdalkalihydriden, wobei die Mischung gegebenenfalls Phosphor- und/oder Stickstoff-haltige Dotiermittel enthält.

Nach beendeter Reaktion wird das so gewonnene Tantal-Pulver durch Waschen mit Mineralsäure, wie z.B. Schwefelsäure, insbesondere unter Zusatz von Wasserstoffperoxid, isoliert. Das auf diese Weise Chloridfrei-gewaschene Tantal-Pulver kann zwecks einer weiteren Dotierung mit Phosphor-haltigen Dotiermitteln belegt werden. Wenn der Sauerstoffgehalt bei vorgegebener spezifischer Oberfläche nach dem Trocknen in der gewünschten Konzentration vorliegt, kann das Material ohne Weiterbehandlung direkt zur Fertigung von Tantalkondensatoren eingesetzt werden. Ist eine Absenkung der Sauerstoffkonzentration im Tantal-Pulver angestrebt, wird vorzugsweise das isolierte und getrocknete Tantal-Pulver einer Desoxidation unterzogen. Dies geschieht vorzugsweise durch Zusatz zugemischter Magnesiumspäne bei einer niedrigen Temperatur von 650 bis 900°C, vorzugsweise 750 bis 850°C, über einen Zeitraum von ½ bis 10 Stunden, vorzugsweise 2-4 Stunden. Das so erhaltene Tantal-Pulver wird dann von den Magnesium-Rückständen durch Waschen mit Mineralsäuren unter einem eventuellen Zusatz von Wasserstoffperoxid befreit und getrocknet. Als geeignete Säure hat sich insbesondere Schwefelsäure erwiesen. Nach dem Auslaugen der Magnesium-Rückstände kann erneut eine Phosphor-Dotierung erfolgen. Dies kann bevorzugt durch Tränken mit den in Lösung vorliegenden Dotiermitteln vorgenommen werden. Bevorzugt liegt der Sauerstoffgehalt der für die Herstellung von Tantalkondensatoren eingesetzten Tantal-Pulver je nach vorhandener spezifischer Oberfläche zwischen 4.000 bis 20.000 ppm. Weiterhin bevorzugt werden die Stickstoff-Gehalte auf Werte von 100-15 000 ppm eingestellt, was insbesondere während der Desoxidation unter Ammoniakzusatz erreicht werden kann. Vorzugsweise wird die "Desoxidation" auch dann durchgeführt, wenn der Sauerstoffgehalt des Pulvers bereits in dem gewünschten Bereich liegt. Die "Desoxidation" dient dann der Reduzierung von Magnesium- und Chlorrückständen aus der Umsetzung des zündfähigen Reaktionsgemisches. Die Anwesenheit des Magnesiums bewirkt dabei, daß kein zusätzlicher Sauerstoff bei der schonenenden Temperaturbehandlung in das Pulver eindiffundiert. Aus entsprechenden Tantal-Pulvern hergestellte Sinter-Anoden sind gekennzeichnet durch geringe Restströme, bevorzugt <2 nA/µFV, insbesondere bevorzugt weniger als 1 nA/µFV.

Das erfindungsgemäße Tantalpulver ist ferner dadurch gekennzeichnet, daß es geeignet ist zur Herstellung von Elektolytkondensatoren mit einer spezifischen Ladung von 120.000 bis 180.000 µFV/g bei einem spezifischen Reststrom von weniger als 2 nA/µFV durch 10-minütiges Versintern bei einer Temperatur von 1100 bis 1300°C und Formieren bei 16 V.

Aus dem erfindungsgemäßen Tantal-Pulver sind gepreßte Anoden erhältlich, die über eine überraschend hohe Anodenbruchfestigkeit verfügen. Diese gepreßten Anoden sind ebenfalls Gegenstand dieser Erfindung. Die Bruchfestigkeit dieser erfindungsgemäßen gepreßten Anoden, gemessen nach Chatillon bei einer Preßdichte von 5 g/cm³, beträgt zwischen 3 und 8 kg, vorzugsweise zwischen 4 und 7 kg. Die Prüfung wird dabei an aus Tantal-Pulver gepreßten zylindrischen Prüfanoden mit 0,521 g Masse, einem Durchmesser von 5,1 mm und einer Länge von 5,1 mm, einer Preßdichte von 5,0 g/cm³ vorgenommen. Die gemäß der DE 1 9536 013 A1 erhältlichen gepreßten Anoden weisen hingegen lediglich Anodenbruchfestigkeiten von <4 kg auf.

Die aus dem erfindungsgemäßen Tantal-Pulver hergestellten Sinteranoden, erhalten durch 10-minütiges Sintern der Pulver bei Temperaturen von 1 150-1 300°C und Formieren bei 16-30 Volt weisen spezifische Ladungen von 80 000-170 000 µFV/g, bevorzugt von 90 000-160 000 µFV/g auf. Besonders bevorzugt betragen die Restströme der erfindungsgemäßen Sinteranoden ≤2 nA/µFV.

### Beispiel 1

### 1. Schritt: Reduktion

Ein Gemisch aus 200 g TaCl₅ und 22 g MgH₂ (MgH₂-Gehalt 90 %) wurde in drei gleiche Mengen aufgeteilt und diese getrennt voneinander durch elektrische Zündung unter Ar-Atmosphäre zur Umsetzung gebracht. Dabei wurde Chlorwasserstoff freigesetzt. Die Umsetzungen erfolgten innerhalb weniger Minuten.

### 2. Schritt: Waschung und Trocknung

Das abgekühlte Reaktionsprodukt wurde nach Siebung durch ein Sieb der Maschenweite 400 µm mit Schwefelsäure/Wasserstoffperoxidlösung gewaschen, bis das Waschwasser weitgehend Chlorid-frei war. Das Material wurde durch wiederholtes Dekantieren vom größten Teil der Säure befreit und auf einer Nutsche mit Wasser säurefrei gewaschen, bei 45°C schonend getrocknet und kleiner 220 µm gesiebt.

Das so hergestellte Tantal-Pulver wies folgende Analysendaten auf:

| | |
|---|---|
| Sauerstoff | 3,3 % |
| Magnesium | 1770 ppm |
| Natrium | < 1 ppm |
| Kalium | < 1 ppm |
| Fluorid | < 2 ppm |
| Chlorid | 361 ppm |
| | |
| Korngröße mittels Fisher Sub Sieve Sizer | 0,37 µm |
| Schüttgewicht nach Scott | 9,5 g/inch³ |
| Spez. Oberfläche nach BET (Quantasorb 3-Punkt) | 9,12 m²/g |
| Mastersizer (ASTM-B-822) D 10 | 1,03 µm |
| Vorbehandlung 15 min. Ultraschall D 50 | 10,50 µm |
| D 90 | 32,33 µm |
| Ausgebrachte Menge Tantalmetall: | 74 g, das entspricht 73,7 % Ausbeute. |

### 3. Schritt: Desoxidation und Säurelaugung

40 g des Primärpulvers wurden mit 7,8 g Magnesiumspänen (= 2-fach stöchiometrische Menge berechnet auf dem Sauerstoffgehalt) vermischt und in einem abgedeckten Tantalschiffchen im Röhrenofen unter Schutzgas (Argon) 2 Stunden lang auf 900°C gehalten. Nach dem Abkühlen wurde das Material durch allmählichen Luftzutritt über ca. 18 Stunden passiviert, so daß es gefahrlos an Luft gehandhabt werden konnte. Die Magnesiumrückstände wurden aus dem Tantal-Pulver mit einer Lösung, enthaltend 8% Schwefelsäure und 1,8% Wasserstoffperoxid herausgelöst. Anschließend wurde das Material mit Wasser säurefrei gewaschen, getrocknet und < 220 µm abgesiebt.

| | | |
|---|---|---|
| Analyse | Sauerstoff | 7700 ppm |
| | Stickstoff | 2600 ppm |
| | Spezi. Oberfläche | 2,35 m²/g |
| | nach BET (Quantasorb 3-Punkt) | |

Das resultierende Pulver wurde zu Anoden verpreßt, gesintert und formiert um anschließend die spezifische Ladung und die Restströme zu bestimmen. Die Bedingungen für die Anodenherstellung sowie die daran gemessenen elektrischen Eigenschaften können aus der Tabelle 2 (s. Probe 1) entnommen werden.

### Beispiel 2

### 1. Schritt: Reduktion

Ein Gemisch aus 434 g TaCl₅ und 48 g MgH₂ (MgH₂-Gehalt 90 %) wurde durch elektrische Zündung zur Umsetzung unter Argon-Atmosphäre gebracht.

### 2. Schritt: Waschung und Trocknung

### siehe Beispiel 1.

Das so hergestellte Tantal-Pulver wies folgende Analysendaten auf:

| | |
|---|---|
| Sauerstoff | 2,2 % |
| Magnesium | 730 ppm |
| Natrium | < 1 ppm |
| Kalium | < 1 ppm |
| Fluorid | < 2 ppm |
| Chlorid | 409 ppm |
| | |
| Korngröße mittels Fisher Sub Sieve Sizer | 0,33 µm |
| Schüttgewicht nach Scott | 12,8 g/inch³ |
| Spez. Oberfläche nach BET (Quantasorb 3-Punkt) | 4,73 m²/g |
| Mastersizer D 10 | 0,94 µm |
| Vorbehandlung 15 min. Ultraschall D 50 | 9,84 µm |
| D 90 | 31,88 µm |
| Ausgebrachte Menge Tantalmetall: | 151 g, das entspricht 69 % Ausbeute. |

### 3. Schritt: Dotierung und Niedrigtemperatur - Desoxidation sowie Säurelaugung

110 g des Tantal-Pulvers wurden mit 7,26 g Magnesiumspänen (= 2-fach stöchiometrische Menge, berechnet auf den Sauerstoffgehalt) vermischt und in einem abgedeckten Tantaltiegel in einer Retorte unter Schutzgas (Argon) 2 Stunden lang auf 850°C gehalten. Nach dem Abkühlen wurde das Material durch allmählichen Luftzutritt über ca. 18 Stunden passiviert, so daß es gefahrlos an Luft gehandhabt werden kann. Die Magnesiumrückstände wurden mit einer Lösung enthaltend 8% Schwefelsäure und 1,8% Wasserstoffperoxid herausgelöst. Anschließend wurde das Tantal-Pulver mit Wasser säurefrei gewaschen und das nutschenfeuchte Material wurde durch Tränken mit 11 ml einer Ammoniumdihydrogenphosphatlösung, die 1 mg P pro ml Lösung enthält, auf 100 ppm Phosphor dotiert, getrocknet und < 220 µm abgesiebt.

| | | | | |
|---|---|---|---|---|
| Analyse | Sauerstoff | 7550 ppm | Mg | 80 ppm |
| | Stickstoff | 2820 ppm | Cl | 59 ppm |
| | Spezi. Oberfläche | 2,2 m²/g | | |
| | nach BET (Quantasorb 3-Punkt) | | | |

Das resultierende Pulver wurde zu Anoden verpreßt, gesintert und formiert um anschließend die spezifische Ladung und die Restströme zu bestimmen. Die Bedingungen für die Anodenherstellung sowie die daran gemessenen elektrischen Eigenschaften können aus der Tabelle 2 (s. Probe 2A) entnommen werden.

### 4. Schritt: Erneute Desoxidation und Säurelaugung, erneute Dotierung

70 g des oben erhaltenen Materials wurden mit 1,6 g Magnesiumspänen, wie unter Schritt 3 beschrieben, erneut 2 Stunden bei 850°C desoxidiert mit einer Lösung enthaltend 8% Schwefelsäure und 1,8% Wasserstoffperoxid behandelt, säurefrei gewaschen und noch einmal mit 50 ppm Phosphor dotiert, so daß der Gesamtphosphorgehalt nun 150 ppm beträgt.

| | | | | |
|---|---|---|---|---|
| Analyse | Sauerstoff | 6170 ppm | Mg | 60 ppm |
| | Stickstoff | 3210 ppm | | |
| | Spezi. Oberfläche | 1,75 m²/g | | |
| | nach BET (Quantasorb 3-Punkt) | | | |

Das resultierende Pulver wurde zu Anoden verpreßt, gesintert und formiert um anschließend die spezifische Ladung und die Restströme zu bestimmen. Die Bedingungen für die Anodenherstellung sowie die daran gemessenen elektrischen Eigenschaften können aus der Tabelle 2 (s. Probe 2B) entnommen werden.

### Beispiel 3

### 1. Schritt: Reduktion

Ein Gemisch aus 1000 g TaCl₅ und 115,5 g MgH₂ (MgH₂-Gehalt 90 %) wurde mit 71 mg rotem Phosphor dotiert und anschließend wie in Beipsiel 2 zur Umsetzung gebracht.

### 2. Schritt: Waschung und Trocknung

### siehe Beispiel 1.

Das Tantel-Pulver wies folgende Analysendaten auf:

| | |
|---|---|
| Sauerstoff | 2,6 % |
| Stickstoff | 2820 ppm |
| Phosphor | 150 ppm |
| Magnesium | 14 ppm |
| Natrium | < 1 ppm |
| Kalium | < 1 ppm |
| Fluorid | < 2 ppm |
| Chlorid | 784 ppm |
| | |
| Korngröße mittels Fisher Sub Sieve Sizer | 0,34 µm |
| Schüttgewicht nach Scott | 13,4 g/inch³ |
| Spez. Oberfläche nach BET (Quantasorb 3-Punkt) | 5,74 m²/g |
| Mastersizer D 10 | 0,87 µm |
| Vorbehandlung 15 min. Ultraschall D 50 | 10,12 µm |
| D 90 | 30,19 µm |
| Ausgebrachte Menge Tantalmetall: 329 g, das entspricht 65 % Ausbeute. | |

Das resultierende Pulver wurde zu Anoden verpreßt, gesintert und formiert um anschließend die spezifische Ladung und die Restströme zu bestimmen. Die Bedingungen für die Anodenherstellung sowie die daran gemessenen elektrischen Eigenschaften können aus der Tabelle 2 (s. Probe 3A) entnommen werden.

### 3. Schritt: Niedrigtemperatur - Desoxidation sowie Säurelaugung

100 g des Tantal-Pulvers wurden mit 7,8 g Magnesiumspänen (= 2-fach stöchiometrische Menge berechnet auf dem Sauerstoffgehalt) vermischt und wie im Beispiel 2 beschrieben einer Desoxidation bei 750°C für 4 Stunden unterzogen Die Magnesium-rückstände wurden mit einer Lösung enthaltend 26% Schwefelsäure und 6% Wasserstoffperoxidlösung herausgelöst. Es wird mit Wasser säurefrei gewaschen, bei 45°C getrocknet, kleiner 220 µm abgesiebt und homogenisiert.

| | | |
|---|---|---|
| Analyse | Sauerstoff | 9770 ppm |
| | Stickstoff | 6090 ppm |
| | Spezi. Oberfläche | 3,12 m²/g |
| | nach BET (Quantasorb 3-Punkt) | |

Das resultierende Pulver wurde zu Anoden verpreßt, gesintert und formiert um anschließend die spezifische Ladung und die Restströme zu bestimmen. Die Bedingungen für die Anodenherstellung sowie die daran gemessenen elektrischen Eigenschaften können aus der Tabelle 2 (s. Probe 3B) entnommen werden.

### 4. Schritt: Dotierung

Ein Teil des desoxidierten Pulvers wurde zusätzlich durch Tränken mit einer Ammoniumdihydrogenphosphatlösung mit 150 ppm Phosphor dotiert, getrocknet und < 220 µm abgesiebt.

Das resultierende Pulver wurde zu Anoden verpreßt, gesintert und formiert um anschließend die spezifische Ladung und die Restströme zu bestimmen. Die Bedingungen für die Anodenherstellung sowie die daran gemessenen elektrischen Eigenschaften können aus der Tabelle 2 (s. Probe 3C) entnommen werden.

### Beispiel 4

### 1. Schritt: Reduktion

Ein Gemisch aus 300 g TaCl₅ und 63 g MgH₂ (MgH₂-Gehalt 90 %) wurde mit 151 mg rotem Phosphor (= 151 mg P) dotiert und anschließend wie in Beispiel 2 zur Umsetzung gebracht. Der Abbrand erfolgte unter vermindertem Argon-Strom. Infolgedessen wurde eine teilweise Nitridierung durch den Luftstickstoff während der Reduktion erreicht.

### 2. Schritt: Waschung und Trocknung

### siehe Beispiel 1.

Das Tantal-Pulver wies folgende Analysendaten auf:

| | |
|---|---|
| Sauerstoff | 1,2 % |
| Stickstoff | 1,2 % |
| Phosphor | 680 ppm |
| Magnesium | 1200 ppm |
| Natrium | < 1 ppm |
| Kalium | < 1 ppm |
| Fluorid | < 2 ppm |
| Chlorid | 71 ppm |
| | |
| Korngröße mittels Fisher Sub Sieve Sizer | 0,57 µm |
| Schüttgewicht nach Scott | 17,3 g/inch³ |
| Spez. Oberfläche nach BET (Quantasorb 3-Punkt) | 3,99 m²/g |
| Mastersizer D 10 | 1,09 µm |
| Vorbehandlung 15 min. Ultraschall D50 | 13,63 µm |
| D90 | 40,18 µm |
| Ausgebrachte Menge Tantalmetall: 129 g, das entspricht 85 % Ausbeute. | |

### 3. Schritt: Niedrigtemperatur - Desoxidation sowie Säurelaugung

75 g des Tantal-Pulvers wurden mit 2,7 g Magnesiumspänen (= 2-fach stöchiometrische Menge berechnet auf den Sauerstoffgehalt) vermischt und wie im Beispiel 2 einer Desoxidation bei 750°C für 4 Stunden und wie im Beispiel 1 einer Säurebehandlung unterzogen.

| | | | | |
|---|---|---|---|---|
| Analyse | Sauerstoff | 12000 ppm | Mg | 85 ppm |
| | Stickstoff | 12000 ppm | Cl | 23 ppm |
| | Spezi. Oberfläche | 3,92 m²/g | | |
| | nach BET (Quantasorb 3-Punkt) | | | |

Das resultierende Pulver wurde zu Anoden verpreßt, gesintert und formiert um anschließend die spezifische Ladung und die Restströme zu bestimmen. Die Bedingungen für die Anodenherstellung sowie die daran gemessenen elektrischen Eigenschaften können aus der Tabelle 2 (s. Probe 4) entnommen werden.

### Beispiel 5

### 1. Schritt: Reduktion

Ein Gemisch aus 300 g TaCl₅ und 63 g MgH₂ (MgH₂-Gehalt 90 %) und 76 mg rotem Phosphor wurde wie in Beispiel 4 zur Umsetzung gebracht.

### 2. Schritt: Waschung und Trocknung

### siehe Beispiel 1.

Das Tantal-Pulver wies folgende Analysendaten auf:

| | |
|---|---|
| Sauerstoff | 12000 ppm |
| Stickstoff | 14000 ppm |
| Phosphor | 360 ppm |
| Magnesium | 460 ppm |
| Natrium | < 1 ppm |
| Kalium | < 1 ppm |
| Fluorid | < 2 ppm |
| Chlorid | 71 ppm |
| | |
| Schüttgewicht nach Scott | 19,4 g/inch³ |
| Spez. Oberfläche nach BET (Quantasorb 3-Punkt) | 3,35 m²/g |
| Mastersizer D 10 | 1,73 µm |
| Vorbehandlung 15 min. Ultraschall D 50 | 19,08 µm |
| D 90 | 56,31 µm |
| Ausgebrachte Menge Tantalmetall: 131 g, das entspricht 86,4 % Ausbeute. | |

### 3. Schritt: Niedrigtemperatur - Desoxidation sowie Säurelaugung

Siehe Beispiel 3.

| | | | | |
|---|---|---|---|---|
| Analyse | Sauerstoff | 10000 ppm | Mg | 75 ppm |
| | Stickstoff | 14000 ppm | Cl | 30 ppm |
| | Spezi. Oberfläche | 3,18 m²/g | | |
| | nach BET (Quantasorb 3-Punkt) | | | |

Das resultierende Pulver wurde zu Anoden verpreßt, gesintert und formiert um anschließend die spezifische Ladung und die Restströme zu bestimmen. Die Bedingungen für die Anodenherstellung sowie die daran gemessenen elektrischen Eigenschaften können aus der Tabelle 2 (s. Probe 5) entnommen werden.

### Beispiel 6

### 1. Schritt: Reduktion

Ein Gemisch aus 300 g TaCl₅ und 63 g MgH₂ (MgH₂-Gehalt 90 %) wurde wie in Beispiel 1 unter Argonspülung zur Umsetzung gebracht.

### 2. Schritt: Waschung und Trocknung

### siehe Beispiel 1.

Das Tantal-Pulver wies folgende Analysendaten auf:

| | |
|---|---|
| Sauerstoff | 1,1 % |
| Stickstoff | 4360 ppm |
| Phosphor | < 1 ppm |
| Magnesium | 980 ppm |
| Natrium | < 1 ppm |
| Kalium | < 1 ppm |
| Fluorid | < 2 ppm |
| Chlorid | 258 ppm |
| | |
| Primärkorn (aus REM) | ≤ 300 nm |
| Schüttgewicht nach Scott | 24,3 g/inch³ |
| Spez. Oberfläche nach BET (Quantasorb 1-Punkt) | 2,45 m²/g |
| Mastersizer D 10 | 3,30 µm |
| Vorbehandlung 15 min. Ultraschall D 50 | 33,14 um |
| D 90 | 114,95 µm |
| Ausgebrachte Menge Tantalmetall: 133 g, das entspricht 87,7 % Ausbeute. | |

### 3. Schritt: Niedrigtemperatur - Desoxidation sowie Säurelaugung

75 g des Tantal-Pulvers und 2,47 g Magnesiumspäne (= 2-fach stöchiometrische Menge berechnet auf dem Sauerstoffgehalt) - Weiterbehandlung siehe Beispiel 3.

| | | |
|---|---|---|
| Analyse | Sauerstoff | 7100 ppm |
| | Stickstoff | 4460 ppm |
| | Spezi. Oberfläche | 1,99 m²/g |
| | nach BET (Quantasorb 3-Punkt) | |

Das resultierende Pulver wurde zu Anoden verpreßt, gesintert und formiert um anschließend die spezifische Ladung und die Restströme zu bestimmen. Die Bedingungen für die Anodenherstellung sowie die daran gemessenen elektrischen Eigenschaften können aus der Tabelle 2 (s. Probe 6) entnommen werden.

### Beispiel 7

### 1. Schritt: Reduktion

Ein Gemisch aus 300 g TaCl₅ und 63 g MgH₂ (MgH₂-Gehalt 90 %) und 152 mg rotem Phosphor wurde unter intensivierter Argonspülung zur Umsetzung gebracht, so daß Luftzutritt ausgeschlossen war.

### 2. Schritt: Waschung und Trocknung

### siehe Beispiel 1.

Das Tantal-Pulver wies folgende Analysendaten auf

| | |
|---|---|
| Sauerstoff | 1,4 % |
| Stickstoff | 144 ppm |
| Phosphor | 780 ppm |
| Magnesium | 45 ppm |
| Natrium | < 1 ppm |
| Kalium | < 1 ppm |
| Fluorid | < 2 ppm |
| Chlorid | 100 ppm |
| | |
| Primärkorn (REM) | ≤ 150 nm |
| Schüttgewicht nach Scott | 18,1 g/inch³ |
| Korngröße mittels Fisher Sub Sieve Sizer | 0,76 µm |
| Spez. Oberfläche nach BET (Quantasorb 1-Punkt) | 4,02 m²/g |
| Mastersizer D 10 | 2,25 µm |
| Vorbehandlung 15 min. Ultraschall D 50 | 23,51 µm |
| D 90 | 58,43 µm |
| Ausgebrachte Menge Tantalmetall: 128 g, das entspricht 84,3 % Ausbeute. | |

### 3. Schritt: Niedrigtemperatur - Desoxidation sowie Säurelaugung

94 g des Tantal-Pulvers und 4,00 g Magnesiumspäne (= 2-fach stöchiometrische Menge berechnet auf dem Sauerstoffgehalt) - Weiterbehandlung siehe Beispiel 3.

| | | |
|---|---|---|
| Analyse | Sauerstoff | 11000 ppm |
| | Stickstoff | 752 ppm |
| | Spezi. Oberfläche | 3,52 m²/g |
| | nach BET (Quantasorb 3-Punkt) | |

Das resultierende Pulver wurde zu Anoden verpreßt, gesintert und formiert um anschließend die spezifische Ladung und die Restströme zu bestimmen. Die Bedingungen für die Anodenherstellung sowie die daran gemessenen elektrischen Eigenschaften können aus der Tabelle 2 entnommen werden.

### Beispiel 8

### 1. Schritt: Reduktion

Ein Gemisch aus 300 g TaCl₅ und 63 g MgH₂ (MgH₂-Gehalt 90 %) und 304 mg rotem Phosphor wurde unter intensivierter Argonspülung zur Umsetzung gebracht, so daß Luftzutritt ausgeschlossen war.

### 2. Schritt: Waschung und Trocknung

### siehe Beispiel 1.

Das Tantal-Pulver wies folgende Analysendaten auf:

| | |
|---|---|
| Sauerstoff | 1,5 % |
| Stickstoff | 240 ppm |
| Phosphor | 1700 ppm |
| Magnesium | 65 ppm |
| Natrium | < 1 ppm |
| Kalium | < 1 ppm |
| Fluorid | < 2 ppm |
| Chlorid | 79 ppm |
| | |
| Primärkorn (REM) | ≤ 100 nm |
| Schüttgewicht nach Scott | 17,2 g/inch³ |
| Korngröße mittels Fisher Sub Sieve Sizer | 0,55 µm |
| Spez. Oberfläche nach BET (Quantasorb 3-Punkt) | 4,82 m²/g |
| Mastersizer D 10 | 1,33 µm |
| Vorbehandlung 15 min. Ultraschall D 50 | 15,89 µm |
| D 90 | 49,19 µm |

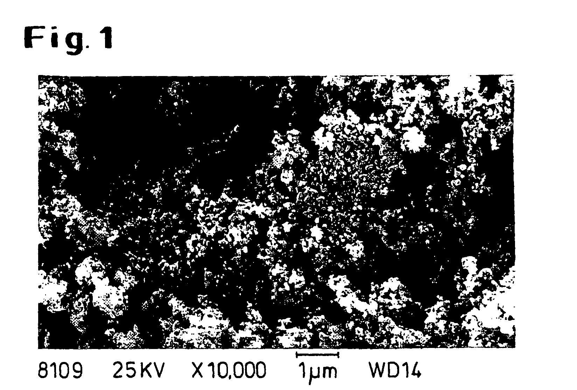

Die Korngröße wird durch die REM-Aufhahme, Fig. 1, veranschaulicht.

Ausgebrachte Menge Tantalmetall: 126 g, das entspricht 83,0 % Ausbeute.

### 3. Schritt: Niedrigtemperatur - Desoxidation sowie Säurelaugung

99 g des Tantal-Pulvers und 4,47 g Magnesiumspänen (= 2-fach stöchiometrische Menge berechnet auf den Sauerstoffgehalt) wurden vermischt und bei 750°C für 4 Stunden desoxidiert. Die Magnesiumrückstände wurden mit Lösung enthaltend 8 % Schwefelsäure und 1,8 % Wasserstoffperoxid herausgelöst.

| | | |
|---|---|---|
| Analyse | Sauerstoff | 12000 ppm |
| | Stickstoff | 1440 ppm |
| | Spezi. Oberfläche | 3,66 m²/g |
| | nach BET (Quantasorb 3-Punkt) | |

Das resultierende Pulver wurde zu Anoden verpreßt, gesintert und formiert um anschließend die spezifische Ladung und die Restströme zu bestimmen. Die Bedingungen für die Anodenherstellung sowie die daran gemessenen elektrischen Eigenschaften können aus der Tabelle 2 entnommen werden (Probe 8).

**Tabelle 1:**

| Elektrischer Test | | | | | | | |
|---|---|---|---|---|---|---|---|
| Probe | PD Preßdichte (g/cm³) | Anodenbruchfestigkeit Chatillon (kg) PD = 5,0g/cm³ | Sintertemperatur (°C) | Sinterdichte (g/cm³) | Formierung (V) | Kapazität (CV/g) | Reststrom (nA/µFV) |
| 1 | 5 | n.d. | 1200 | 4,6 | 16 | 79119 | 8,18 |
| 2A | 5 | n.d. | 1200 | 4,9 | 16 | 84712 | 3,95 |
| 2B | 5 | 3,1 | 1200 | 4,5 | 16 | 92113 | 3,97 |
| 3A | 5,75 | 5,34 | 1200 | 6,1 | 16 | 114456 | 1,63 |
| 3B | 5 | n.d. | 1200 | 4,9 | 16 | 119121 | 1,63 |
| 3C | 5 | n.d. | 1200 | 4,9 | 16 | 123678 | 2,01 |
| 4 | 5 | a5,81 | 1200 | 4,6 | 16 | 149910 | 2,19 |
| | 5 | | 1250 | 4,8 | 16 | 143936 | 0,77 |
| | 5 | | 1300 | 5,5 | 16 | 111879 | 4,1 |
| | 5 | | 1250 | 5 | 30 | 84724 | 2,7 |
| | 5 | | 1250 | 5 | 20 | 106701 | 1,95 |
| 5 | 5 | 7,05 | 1200 | 4,7 | 16 | 133428 | 3,32 |
| | 5 | | 1250 | 4,8 | 16 | 123626 | 0,973 |
| | 5 | | 1300 | 5,6 | 16 | 104041 | 4,48 |
| | 5 | | 1300 | 5,9 | 30 | 80184 | 3,24 |
| 6 | 5 | 4,56 | 1200 | 5 | 16 | 95742 | 4,57 |
| | 5 | | 1250 | 5 | 16 | 88500 | 1,39 |
| 7 | 5 | 6,5 | 1200 | 4,7 | 16 | 155911 | 1,58 |
| | 5 | | 1250 | 5,2 | 16 | 144255 | 0,69 |
| 8 | 5 | 6,5 | 1200 | 4,8 | 16 | 151745 | 1,22 |
| | 5 | | 1250 | 5,8 | 16 | 130031 | 0,67 |
| Anodenmasse: 0,05 g | | | | | | | |
| Sinterzeit: 10 min | | | | | | | |

### Beispiele 9 - 16

### 1. Schritt Reduktion

Ein Gemisch aus 300 g TaCl₅, 63 g MgH₂, x mg rotem Phosphor und y g NH₄Cl wurde durch elektrisch Zündung unter Argonatmosphäre zur Umsetzung gebracht (siehe Tabelle 2).

**Tabelle 2**

| Beispiel | P x (mg) | NH₄Cl y (g) |
|---|---|---|
| 9 | 0 | 0 |
| 10 | 152 | 0 |
| 11 | 304 | 0 |
| 12 | 0 | 2,32 |
| 13 | 0 | 4,64 |
| 14 | 152 | 1,16 |
| 15 | 152 | 2,32 |
| 16 | 152 | 4,64 |

### 2. Schritt: Waschung und Trocknung

Das abgekühlte Reduktionsgut wurde mit einer Schwefelsäure/Wasserstoffperoxidlösung gewaschen, um das Magnesiumchlorid zu entfernen. Das Material wurde ein- bis zweimaliges Dekantieren vom größten Teil der Säure befreit und auf einer Nutsche mit Wasser säurefrei gewaschen, bei 45°C getrocknet und kleiner 400 µm gesiebt. Der Zusammenhang zwischen dem Dotierungsgehalt und der Oberfläche kann der nachfolgenden Tabelle 3 entnommen werden.

**Tabelle 3**

| Beispiel | P x ppm | N y ppm | Spez. Oberfläche nach BET (Quantasorb) (m²/g) | Na/K-Gehalt (ppm) | F-Gehalt (ppm) |
|---|---|---|---|---|---|
| 9 | 0 | 0 | 2,30 | < 2 | < 5 |
| 10 | 1000 | 0 | 4,02 | < 2 | < 5 |
| 11 | 2000 | 0 | 4,82 | < 2 | < 5 |
| 12 | 0 | 4000 | 3,24 | < 2 | < 5 |
| 13 | 0 | 8000 | 4,05 | < 2 | < 5 |
| 14 | 1000 | 2000 | 3,94 | < 2 | < 5 |
| 15 | 1000 | 4000 | 4,15 | < 2 | < 5 |
| 16 | 1000 | 8000 | 5,29 | < 2 | < 5 |

### 3. Schritt: Niedrigtemperatur-Desoxidation sowie Säurelaugung

Das Tantal-Pulver wurde mit einer 2-fach stöchiometrischen Menge an Magnesiumspänen (berechnet auf den Sauerstoffgehalt) vermischt und in einem abgedeckten Tantaltiegel in einer Retorte unter Schutzgas (Argon) 4 Stunden auf 750°C gehalten. Nach dem Abkühlen wurde das Material durch allmählichen Luftzutritt über ca. 18 Stunden passiviert, so daß es gefahrlos an Luft gehandhabt werden kann. Die Magnesiumrückstände wurden mit einer Lösung, enthaltend 8 % Schwefelsäure und 1,8 % Wasserstoffperoxid, herausgelöst. Anschließend wurde das Tantalpulver mit Wasser säurefrei gewaschen, bei 45°C getrocknet und kleiner 400 µm abgesiebt.

Das resultierende Pulver wurde zu Anoden verpreßt, gesintert und formiert, um anschließend die spezifische Ladung und die Restströme zu bestimmen (siehe Tabelle 4).

| | |
|---|---|
| Anodengewicht | 0,0466 g |
| Preßdichte | 5,0 g/cm³ |
| Formierspannung | 16 V |

**Tabelle 4**

| Bsp. | Anodenbruchfestigkeit Chatillon (kg) PD = 5,0 g/cm³ | Sintertemperatur (°C) | Sinterdichte (g/cm³) | Kapazität (CV/g) | Reststrom (nA/µFV) |
|---|---|---|---|---|---|
| 9 | 6,64 | 1200 | 5,1 | 103 027 | 3,0 |
| | | 1250 | 5,3 | 80 681 | 1,8 |
| 10 | 6,50 | 1200 | 4,6 | 147 489 | 0,5 |
| | | 1250 | 5,2 | 143 895 | 1,7 |
| 11 | 6,50 | 1200 | 4,4 | 155 621 | 0,6 |
| | | 1250 | 5,5 | 133 532 | 1,9 |
| 12 | 4,96 | 1200 | 5 | 107 201 | 2,0 |
| | | 1250 | 5,5 | 84 343 | 1,9 |
| 13 | 5,14 | 1200 | 5,3 | 109 480 | 2,9 |
| | | 1250 | 5,7 | 86 875 | 1,3 |
| 14 | 5,48 | 1200 | 5 | 148 921 | 1,8 |
| | | 1250 | 5,3 | 127 065 | 4,0 |
| 15 | 7,37 | 1150 | 5 | 173 696 | 0,8 |
| | | 1200 | 5,1 | 160 922 | 1,7 |
| | | 1200 | 5,1 | 108 526 | |
| 16 | 7,52 | 1200 | 5,2 | 175 300 | 1,4 |

## Patentansprüche

1. Tantalpulver-Agglomerate mit einer Primärkorngröße von 50 bis 300 nm und einem D-50-Wert der Sekundärkorngröße (ASTM-B-288) von oberhalb 10 µm, einem Alkaligehalt von weniger als 2 ppm und einem Fluorgehalt von weniger als 20 ppm.

2. Tantalpulver nach Anspruch 1 mit einem Phosphorgehalt von 30 bis 3.000 ppm.

3. Tantalpulver nach Anspruch 1 oder 2 mit einem Sauerstoffgehalt von 4.000 bis 20.000 ppm und einem Stickstoffgehalt von 100 bis 15.000 ppm.

4. Tantalpulver nach einem der Ansprüche 1 bis 3 mit einer spezifischen Oberfläche nach BET von 2 bis 6 m²/g.

5. Tantalpulver nach einem der Ansprüche 1 bis 3 mit einem Fluorgehalt von weniger als 5 ppm.

6. Tantalpulver nach einem der Ansprüche 1 bis 5, aus dem nach Versinterung bei einer Temperatur zwischen 1.100 und 1.300°C während 10 Minuten und Formierung bei 16 V ein Kondensator mit einer spezifischen Ladung von 120.000 bis 180.000 µFV/g bei einer Reststromdichte von weniger als 2 nA/µFV erhältlich ist.

7. Sinteranoden, erhalten durch 10-minütiges Sintern von gepressten Tantal-Pulvem gemäß einem oder mehreren der Ansprüche 1 bis 5 bei Temperaturen von 1.150 bis 1.300°C und Formieren bei 16 bis 30 V, **dadurch gekennzeichnet, dass** sie spezifische Ladungen von 80.000 bis 170.000 µFV/g aufweisen.

8. Verfahren zur Herstellung von Tantalpulvern gemäß einem der Ansprüche 1 bis 6, **dadurch gekennzeichnet, dass** ein Gemisch aus Tantalchlorid und Erdalkalihydriden über eine Zündung unter Inertgasatmosphäre umgesetzt und das dabei gebildete Tantalpulver durch Waschung mit Mineralsäuren isoliert und getrocknet wird.

9. Verfahren gemäß Anspruch 8, **dadurch gekennzeichnet, dass** das Gemisch als Dotiermittel Phosphor- und/oder Stickstoff-haltige Substanzen enthält.

10. Verfahren gemäß einem der Ansprüche 8 oder 9, **dadurch gekennzeichnet, dass** das isolierte und getrocknete Tantalpulver einer Desoxidation unterzogen wird.

## Claims

1. Tantalum powder agglomerates with a primary grain size of 50 to 300 nm, a D 50 value of the secondary grain size (ASTM-B-288) greater than 10 µm, an alkali content of less than 2 ppm and a fluorine content of less than 20 ppm.

2. Tantalum powder according to claim 1, with a phosphorus content of 30 to 3000 ppm.

3. Tantalum powder according to claims 1 or 2, with an oxygen content of 4000 to 20,000 ppm and a nitrogen content of 100 to 15,000 ppm.

4. Tantalum powder according to any one of claims 1 to 3, with a BET specific surface of 2 to 6 m²/g.

5. Tantalum powder according to any one of claims 1 to 3, with a fluorine content of less than 5 ppm.

6. Tantalum powder according to any one of claims 1 to 5, from which after sintering at a temperature between 1100 and 1300°C for 10 minutes and forming at 16 volts a capacitor can be obtained which has a specific charge of 120,000 to 180,000 µFV/g at a leakage current density of less than 2 nA/µFV.

7. Sintered anodes obtained by sintering pressed tantalum powders according to one or more of claims 1 to 5 at temperatures of 1150 to 1300°C and forming at 16 to 30 volts, **characterised in that** they have specific charges of 80,000 to 170,000 µFV/g.

8. A process for producing tantalum powders according to one or more of claims 1 to 6, **characterised in that** a mixture of tantalum chloride and alkaline earth metal hydrides is reacted by way of ignition under an inert gas atmosphere, and the tantalum powder which is thereby formed is isolated by washing with mineral acids and is dried.

9. A process according to claim 8, **characterised in that** the mixture contains substances containing phosphorus and/or nitrogen as dopants.

10. A process according to either one of claims 8 or 9, **characterised in that** the isolated, dried tantalum powder is subjected to deoxidation.

## Revendications

1. Agglomérats de poudre de tantale ayant une granulométrie primaire de 50 à 300 nm et une valeur D-50 de la granulométrie secondaire (ASTM-B-288) supérieure à 10 µm, une teneur en alcalis inférieure à 2 ppm et une teneur en fluor inférieure à 20 ppm.

2. Poudre de tantale selon la revendication 1 ayant une teneur en phosphore de 30 à 3 000 ppm.

3. Poudre de tantale selon la revendication 1 ou 2 ayant une teneur en oxygène de 4 000 à 20 000 ppm et une teneur en azote de 100 à 15 000 ppm.

4. Poudre de tantale selon l'une des revendications 1 à 3 ayant une surface spécifique selon BET de 2 à 6 m²/g.

5. Poudre de tantale selon l'une des revendications 1 à 3 ayant une teneur en fluor inférieure à 5 ppm.

6. Poudre de tantale selon l'une des revendications 1 à 5 à partir de laquelle il est possible d'obtenir, après frittage à une température de 1 100 à 1 300°C pendant 10 min et mise en forme à 16 V, un condensateur ayant une charge spécifique de 120 000 à 180 000 µFV/g pour une densité de courant résiduelle inférieure à 2 nA/µFV.

7. Anodes frittées obtenues par frittage de 10 min de poudres de tantale pressées selon une ou plusieurs des revendications 1 à 5 à des températures de 1 150 à 1 300°C et mise en forme à 16 à 30 V, **caractérisées en ce qu'**elles présentent des charges spécifiques de 80 000 à 170 000 µFV/g.

8. Procédé de production de poudres de tantale selon l'une des revendications 1 à 6, **caractérisé en ce qu'**un mélange de chlorure de tantale et d'hydrures alcalino-terreux est mis à réagir par le biais d'un amorçage dans une atmosphère de gaz inerte et la poudre de tantale ainsi formée est isolée par lavage avec des acides minéraux et séchée.

9. Procédé selon la revendication 8, **caractérisé en ce que** le mélange contient comme agents dopants des substances contenant du phosphore et/ou de l'azote.

10. Procédé selon l'une des revendications 8 et 9, **caractérisé en ce que** la poudre de tantale isolée et séchée est soumise à une désoxydation.
